# EUROPEAN PATENT SPECIFICATION

(11) **EP 1 400 426 B1**
(45) Date of publication and mention of the grant of the patent: **18.07.2007**
(21) Application number: 03255922.1
(22) Date of filing: 22.09.2003
(51) Int. Cl.: B61C 17/04, G05G 9/047, B60W 10/18

(54) **Drive controller for a rail vehicle**
Steuerschalter für ein Schienenfahrzeug
Manipulateur de commande pour un véhicule ferroviaire

(30) Priority: 23.09.2002 GB 0222044
(43) Date of publication of application: 24.03.2004
(73) Proprietor: Bombardier Transportation GmbH, 13627 Berlin (DE)
(72) Inventor: Gelbert, Lutz, 12555 Berlin (DE); Glier, Bernd, 10247 Berlin (DE)
(74) Representative: Broydé, Marc

(56) References cited:
- EP-A- 0 473 512
- EP-A- 0 938 035
- DE-C- 4 445 583
- FR-A- 1 300 160
- GB-A- 1 140 266

## Description

The present invention relates to a drive controller and more particularly to an electronic drive-by-wire controller for a rail vehicle.

In modem rail vehicles, particularly in the case of high-speed trains, the driver's cabin is increasingly sophisticated in design and equipment. To meet modem standards of service and safety, equipment must be simple to use whereby faults and driver error are eliminated or their consequences are minimised. This is particularly important in the case of long distance trains operating across national borders where drivers of different states may be required to operate the same vehicle and where different vehicles operated by different national operators may be differently equipped.

A particular source of driver error involves the operation of essential functions under conditions where visibility within the cabin is reduced such as at night, or where the driver's attention is focused on another function as may occur when confronted with an unfamiliar situation or on negotiating a particular stretch of track. In these circumstances it is essential that the driver can operate these functions by touch alone without the possibility of confusion.

Typical essential functions that may be required include:
■ Drive signal: to determine the speed or acceleration of the vehicle.
■ Brake signal: to determine the degree of braking applied to the vehicle.
■ Brake selection: to determine the particular form of braking used
   o electrodynamic (indirect) braking
   o eddy current (indirect) braking
   o pneumatic or hydraulic (direct) braking
   o aerodynamic braking (air drag used on some high speed trains)
   o automatic braking (a computer optimised combination of any of the above).
■ Deadman: generally in the form of a switch which must be actuated every 30 or 60 seconds to prevent automatic break actuation.
■ Horn: warning signal

Prior art drive control arrangements have generally provided the above functions as separate elements. Document DE4445583 discloses such a prior art device in which the drive signal is determined by the position of a first lever which actuates a series of mechanical elements to cause a position transducer to emit a corresponding drive signal. Interlock means is provided on a handle located on the lever to prevent inadvertent operation thereof in a direction which would cause a speed increase. A second lever is also provided to control the degree of braking or driving force, by which the acceleration/deceleration of the train is determined. No other functions are provided on this arrangement and they must therefore be included as separate elements located elsewhere on the driver's console.

A control desk of a driver's cab of a traction unit for a high-speed train is disclosed in EP 0 473 512 A1, the desk being equipped with devices permitting in-cabin signalling, the desk also comprising control members permitting the driving of the traction unit, the desk also being equipped with a head-up visual display system. One of the levers serves to control regenerative braking. Three additional levers are provided to control the brakes in a conventional manner.

An alternative arrangement is known from an existing train manufactured by Bombardier Transportation under the name Crusaris Contessa. According to this arrangement, drive and brake signals are provided together on a single stick control in the form of a joystick. Instead of actuating a mechanical transmission the joystick is connected directly with position encoders and operates on a drive-by-wire basis with movement of the joystick producing corresponding drive and brake signals. Such an arrangement is extremely useful in those situations where the limited depth of the driver's desk allows limited space for incorporation of a mechanical device.

The joystick design of the Crusaris Contessa incorporates an additional interlock means located upon the upper surface thereof. This interlock operates in a similar fashion to the device of DE4445583 and must be depressed before the joystick may be moved in the direction of speed increase. A reduction in speed or brake actuation does not require release of the interlock.

Other train designs use other arrangements of controls. The VT 612 a diesel vehicle also manufactured by Bombardier Transportation and in service with Deutsche Bahn uses two separate levers to control motion of the train. A first lever located on the left of the driver gives the drive signal and also actuates a hydrodynamic braking system in the form of a retarder which is used for gentle slowing down of the train. A second pneumatic brake system is also provided which is about eight times as strong as the retarder. A second lever on the right hand side of the driver operates a brake computer which activates both the pneumatic braking system and the hydrodynamic braking system according to a programmed algorithm when increased braking force is required.

On the ICE3 high speed train in service with the Deutsche Bahn, a further arrangement of controls is provided. A first lever located to the left of the driver is set to a desired speed. A second lever, also located on the left of the driver is moved to determine the tractive force of the motors and hence the acceleration of the train. A third lever located to the right of the driver operates a brake computer which brakes the train using a combination of electrodynamic braking via the motor, pneumatic braking on all of the axles and eddy-current braking via the rails.

As is thus apparent, it is a characteristic of rail vehicles to use a plurality of levers to provide driving and braking functions and in particular to differentiate between the different forms of brake system needed to conduct the complex operation of bringing a massive vehicle safely to rest. It is also apparent that a large variation in the configuration of these drive controls exists. The separate disposition of these controls on the driver's console and in particular their variation from one vehicle to another are frequent sources of driver error. According to the prior art, other functions such as the deadman and horn are also provided as separate buttons which may also vary considerably from on vehicle to another.

It is also an essential requirement of any drive controller for a rail vehicle that it be comfortable for operation over a prolonged period. During longer journeys of one or more hours, the driver may be required to remain relatively immobile in the driving position with one hand grasping the drive controller. It is therefore important that any such device is easy and comfortable to hold and that its functions are easy to operate. Ideally, in order to cater for different tastes or to allow the driver to alternate the position of his or her hand, the drive controller should be provided with different gripping surfaces.

In other fields, unrelated to the field of rail vehicles, it is known to provide joystick type controllers which combine a number of different functions. Typically in the field of gaming devices, joysticks are provided which control two directions of movement and further combine shooting or selection buttons in the form of triggers located in the finger and thumb regions of the handgrip. Such devices, are inherently unsuitable for use as drive controllers for rail vehicles. In particular, the disposition of protruding triggers and buttons in the finger and thumb regions means that such functions are easily actuated and could be operated by accident. Additionally, their positioning would be undesirable on these surfaces which should be smooth and unencumbered to ensure the necessary degree of comfort for the driver who must maintain the controller in his hand for an extended period.

Generally too, the moulded plastic construction of these joystick devices is insufficiently robust for them to be considered as suitable for use in the field of rail vehicle control. Most such conventional joysticks in which a number of functions are combined are constructed in two halves, the handgrip of the joystick being divided in the vertical plane. The two halves are screwed, glued or clipped together after assembling the required triggers and buttons within the interior of the handgrip. The joint line between the two halves extends over the full length of the handgrip and is both aesthetically unpleasing and also uncomfortable for the driver to grip for long periods. This is especially the case where the two halves have been (repeatedly) opened e.g for service or maintenance.

There is therefore a need for an improved drive controller which can integrate all of the essential functions required for driving a rail vehicle into a single device, while ensuring fail-safe operation under all driving conditions both during the day and at night and which provides a high degree of comfort for the driver even over prolonged periods of use. The drive controller should be robust in construction and easy to maintain and service.

It is a characteristic of the present invention that the drive controller is operable in two directions to operate two mutually exclusive functions. In the case of a train, these may for instance constitute the drive and brake functions. It is also conceivable however that in other contexts such as that of mechanical diggers, these mutually exclusive functions may be forward and backward movement or opening and closing. It is also possible that the controller may also be moveable in another two direction orthogonal to the first two directions. The controller may thus be actuated in the up and down directions or in the left and right directions too. It is also conceivable that movement of the controller may follow an arcuate path or a more complex path including motion in two dimension similar to the plan of a vehicle gear box.

According to the present invention there is thus provided a rail vehicle including a drive controller comprising a drive control member and a control unit, the control unit being adapted to generate a drive signal upon movement of the drive control member in a first direction with respect to the control unit and generating a brake signal upon movement in a second direction opposite to the first direction, the drive control member further being provided with a switch, actuation of the switch causing operation of an essential function of the rail vehicle and whereby the switch is provided on the drive control member such that inadvertent operation of the switch is precluded.

There is also provided a rail vehicle with driving means and a plurality of braking means, the rail vehicle further being provided with a drive control member, movement of the drive control member serving to control the driving means and the plurality of braking means to adjust the speed of the train, the drive control member further comprising a switch by which one or more of the braking means can be selectively deactivated.

Advantageously, the drive controller is provided with second or further switches also located on the drive control member such that inadvertent operation is precluded and whereby the first and second switches are separately located so that they can be easily tactilely differentiated.

It is also desirable that the drive control member may be moveable in a third generally vertical direction to actuate a further essential function which may be a deadman automatic brake system.

Preferably, the drive control member comprises a generally hollow handgrip, the handgrip being formed by two joined parts, a first generally curved body portion having an interior space and a second lid portion serving to close the interior space. The switch or switches are preferably provided on the lid portion for ease of access and maintenance.

Further aspects and advantages of the present invention are embodied in the dependent claims.

Embodiments of the present invention will now be described, by way of example only, having reference to the accompanying figures, in which:
Figure 1 is a perspective view of a prior art driver's console as used in the ICE 3 high-speed train;
Figure 2 is a side view of a drive control member according to the present invention;
Figure 3 is a front view of the drive control member of Figure 2 taken in the direction of motion of the vehicle;
Figure 4 is a cross sectional view of the drive control member taken along the line **4-4** of figure 3;
Figure 5 is a side view of a drive control member according to an alternative embodiment of the present invention; and
Figure 6 is a plan view of the drive control member according to Figure 5.

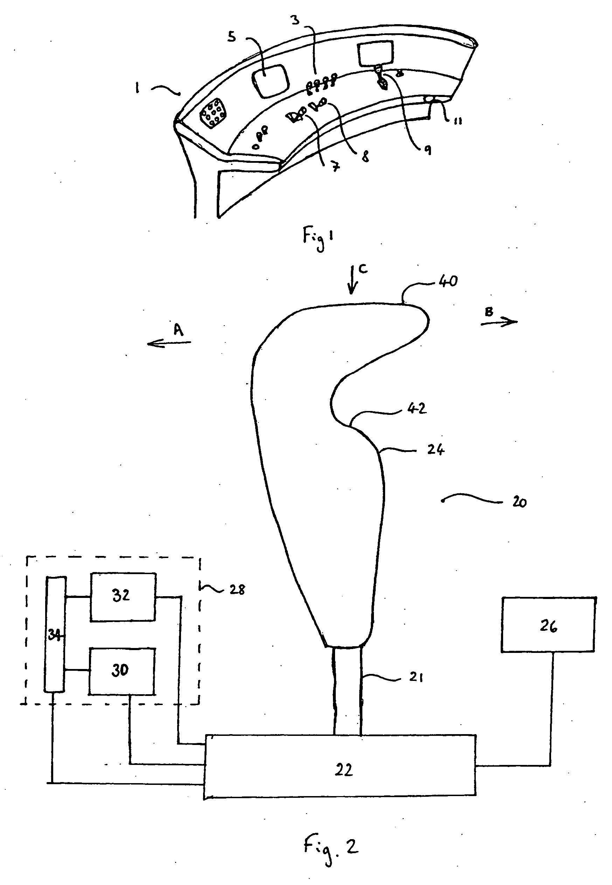

A prior art driver's console 1 as used on the ICE 3 train is illustrated in Figure 1 indicating the location of the various controls 3 and instruments 5. A first lever 7 is located at a left side of the driver's desk 2. This first lever 7 may be set by the driver to a position corresponding to the desired speed of the train. Adjacent to the first lever 7 is a second lever 8 which allows the driver to initiate the drive procedure and determine the degree of traction applied by the motors. By varying the position of this second lever, the degree of acceleration of the train is determined. A third lever 9 is located to the right of the driver by which the braking procedure may be controlled. Movement of the third lever 9 causes actuation of the train's three brake systems. An on-board brake computer distributes the braking operation between the electrodynamic, pneumatic and eddy current brakes. Beneath the driver's desk is located a deadman switch 11. This switch in the form of a large button must be actuated in response to a periodic warning signal. If the deadman is not actuated within a given time period after sounding of the warning signal an automatic emergency braking system operates to bring the train to rest.

Figure 2 shows a drive controller according to the present invention which comprises a drive control member 20 which is attached to a control unit 22 by a shaft 21. The drive control member 20 includes a handgrip 24 formed in an ergonomically optimised shape and is located upon the driver's desk. The control unit 22 which is preferably an electronic drive-by-wire type unit is located within or below the driver's desk. The arrow B in Figure 2 indicates the direction of the front of the rail vehicle. In use, the control unit 22 provides signals to a drive unit 26 and to brake unit 28. Movement of the drive control member 20 in the direction of the arrow B causes the control unit 22 to generate drive signals which may vary according to the magnitude of the movement. Movement of the drive control member 20 in the opposite direction A causes the control unit 22 to generate braking signals which may also vary according to the magnitude of the movement. It is alternatively also possible that the control unit 22 may generate additional signals according to the speed of movement of the drive control member 20.

The brake unit 28 comprises a number of systems. In a preferred embodiment, these may comprise a pneumatic brake system 30, an electrodynamic brake system 32 and an automatic brake system 34. The driver may individually select either the pneumatic brake system 30 or the electrodynamic brake system 32 or he may allow the automatic brake system 34 to select and/or combine these systems according to a predefined program which may depend on the manner of braking, the speed of the train and the conditions of the wheels etc.

The handgrip 24 includes a number of interface surfaces, defined as being those areas of the handgrip which are adapted for receiving the palm of a driver's hand during operation of the rail vehicle. A first interface surface is provided by the upper surface 40 upon which the palm of the hand may be rested. A second interface surface is provided by the intermediate surface 42 which may be cupped in the palm of the hand.

Figure 3 shows a front view of the drive control member 20. According to the present invention, the handgrip 24 is provided with a number of switches. A first electrodynamic override switch 44 overrides the other brake systems in favour of the electrodynamic brake system 32. On actuation of this first switch 44, movement of the drive control member 20 in the direction A causes the control unit 22 to provide signals to the electrodynamic brake system 32. A second pneumatic override switch 46 overrides the other brake systems in favour of the pneumatic brake system 30. On actuation of this second switch 46, movement of the drive control member 20 in the direction A causes the control unit 22 to provide signals to the pneumatic brake system 30. A third automatic override switch 48 overrides the other brake systems in favour of the automatic brake system 30. On actuation of this third switch 48, movement of the drive control member 20 in the direction A causes the control unit 22 to provide signals to the automatic brake system 34.

According to an important aspect of the present invention, the location and arrangement of these switches is important. Firstly, they must be located away from the interface surfaces 40, 42 of the handgrip 24 in order that the driver is not obliged to maintain his or her hand upon the switches during use. To achieve this aim, the switches are located on the rearwardly facing surface of the handgrip 24. Secondly, they should be located in such a way that they are also not easily actuated accidentally in use. To this end, the switches are located in recesses 45, 47, 49 below the level of the surface of the handgrip 24. Thirdly, they should be tactilely easily distinguished from one another to avoid actuation of the wrong switch especially when the driver operates them by touch alone. To achieve this, the switches are separated from one another by ridges 52 and are also of different shapes.

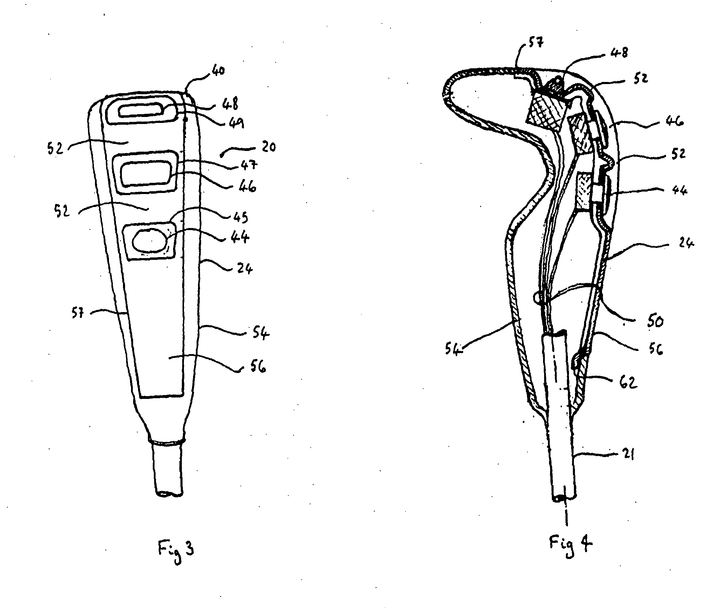

A cross section through the handgrip 24 is illustrated in Figure 4, which shows the switches 44, 46 and 48 and their location on the rearwardly facing surface of the handgrip. Wires 50 connect the switches to the control unit 22. Various forms of switch may be envisaged. In the present embodiment, the switches 44, 46 and 48 are arranged as single action switches, actuation of one switch causing the others to be overridden. It is also possible that they be arranged as rocker switches having two or three positions whereby a particular braking system may be selected. While the present embodiment illustrates them one above the other, two or more of them may be located next to one another.

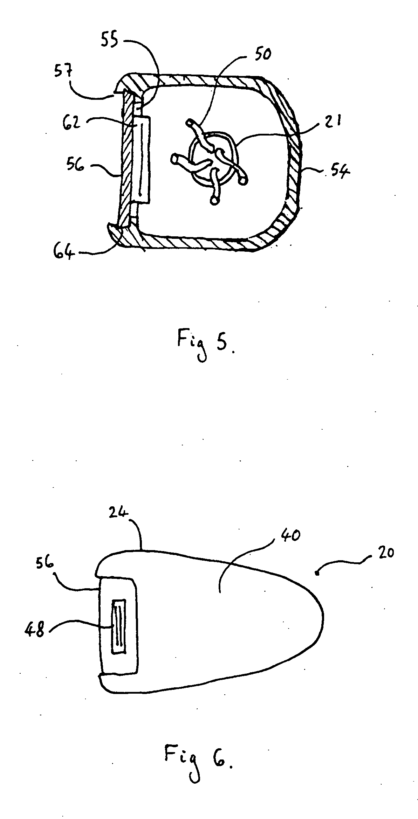

Figure 5 is a further cross section taken on a horizontal plane and illustrating the construction of the handgrip 24. A further important aspect of the present invention lies in this construction.

As can be seen from Figures 3, 4 and 5, the handgrip is formed of a first curved body portion 54 having an opening 55 into an interior space and a second lid portion 56. The joint 57 between the lid portion 56 and the body portion 54 is preferably located away from the interface surfaces 40 and 42. Furthermore, the lid portion 56 is also slightly recessed with respect to the body portion 54. These aspects together ensure that the driver's hand is not exposed to any sharp edges caused by the joint 57. The switches 44, 46 and 48 are all located upon the lid portion 56. This has the additional advantage that easy access and installation of these switches during manufacture and servicing of the drive control member is assured.

The connection between the two portions will depend on the particular materials used and may be by screwing, clip fastening or by more permanent means such as glueing or welding. The embodiment according to Figure 4 includes a lip element 62 formed at the base of the lid portion 56, which inserts into the body portion 54. The lid portion may then be pivoted up around the lip element until it clips into position within a recess 64 formed along the edges of the opening 55.

The lid portion 56 and the body portion 54 may be made from any appropriate material which is sufficiently robust to withstand the forces and wear associated with a drive controller for a rail vehicle. Exemplary materials may include resilient and rigid plastics, metals, composites and any combinations of the above. Advantageously, metal may be used in the handgrip to avoid the presence of static electricity and its unpleasant effects by earthing.

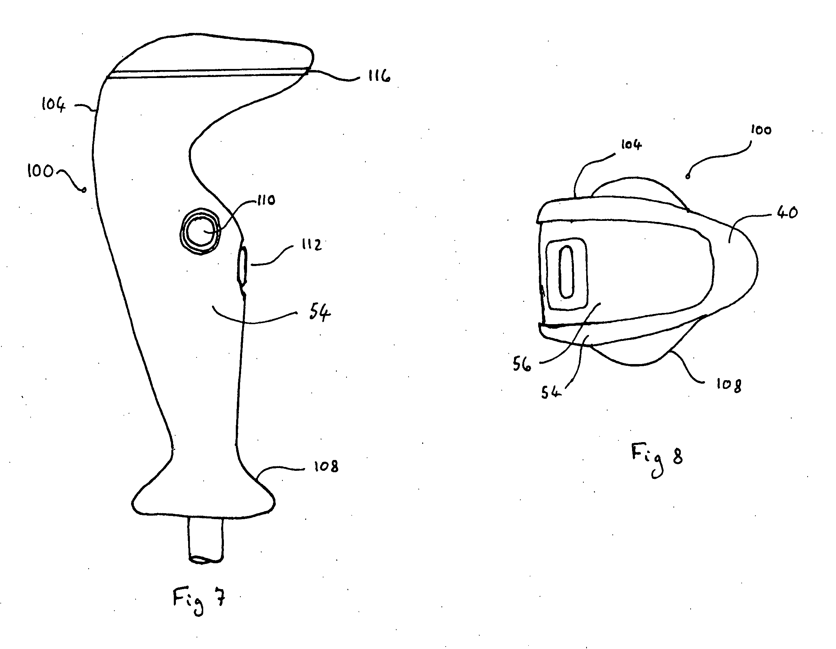

Figure 6 indicates a view of the upper surface 40 of the handgrip 24 of the drive controller 20. In this view, only the upper part of the lid portion 56 supporting the third automatic override switch 48 is visible. As stated above however, both this switch 48 and this section of the lid portion 56 are recessed with respect to the upper surface 40 so that the driver's hand can lie comfortably upon this interface surface.

The comfort of the driver's hand is particularly important with respect to a further function of the drive control member 20. The drive control member is actuable in a third generally downwards direction C. This movement operates the deadman function. During operation of the rail vehicle, the driver must actuate the deadman switch at regular intervals, typically every 30 to 60 seconds. If the deadman switch is not actuated within the given period, a safety system emits a warning signal and if the deadman is still not actuated, an emergency braking system is activated to automatically bring the rail vehicle to a standstill. Continuous actuation of the deadman function over a long period may lead to fatigue and blistering if the switch is not suitably formed.

The drive control member 20 of the present invention is particularly well adapted to actuation of the deadman function in that it provides two alternative positions for the driver's hand which allows a variation of posture. The driver may lay his or her hand upon the upper surface 40 or alternatively wrap it around the intermediate surface 42, both of which provide sufficient support for actuation of the drive control member 20 in the vertical direction C.

A second embodiment of the present invention is illustrated in Figures 7 and 8 which discloses a drive control member 100 similar to the first embodiment of Figures 2 to 6. In this embodiment, like numerals will be used to denote like elements. The drive control member 100 comprises a hand grip 104 of generally similar construction to handgrip 24. It includes however a third interface surface provided by flared lower surface 108. The flared lower surface provides a convenient and comfortable hand position by which actuation of the above mentioned deadman function may be achieved.

The handgrip 104 is also provided with an additional button 110 located on a side region of the curved body portion 54. This button may be used to provide any further function which it may be desired to integrate into the drive controller. Examples of such functions may include an interlock function to prevent movement of the drive control member 100 until the button 110 has been depressed. Alternatively, the button 110 may be used to actuate a warning signal such as a horn or claxon. A further button 112 is located on a forward surface of the handgrip 104 and may also be used to provide one of the above functions. It is also possible that either of these buttons be used as alternatives to one or more of the switches 54, 56 and 58 located on the lid portion or for actuation of the deadman function. For the reasons given above, these buttons should be suitably recessed to avoid accidental actuation and to prevent discomfort for the driver. They should also be suitably distinguished by their locations to prevent erroneous actuation.

As an additional aid to identification of the individual buttons and switches, various parts of the handgrip may be provided with illuminating means to ensure nighttime recognition. In Figure 7, the handgrip 104 is provided with an illuminated band of transparent material 116 which glows by virtue of an LED or other light source located within the handgrip 104. Alternatively this band may be formed of luminous material which glows in the dark. It is also considered that various buttons and switches may also be provided with illumination means. For instance, all of the switches may be formed of transparent or light conducting material, illuminated by a light source within the handgrip.

The view of the upper surface 40 of handgrip 104 in Figure 8 illustrates the lid portion 56 extending further forwards in the direction B. This form of the lid portion 56 provides increased access to the interior space within the body portion 54.

While the above examples illustrate preferred examples of the present invention it is noted that various other arrangements of drive control members and handgrips may also be considered which fall within the scope of the appended claims. In particular, instead of a handgrip pivotally mounted upon a shaft, the whole hand grip may be slideably mounted to the control unit.

While the present invention has been described in relation to a drive controller for a rail vehicle it is also envisaged that it may be applicable to other vehicles where the requirement of multiple functions on a single control member are required. Such applications may include aircraft, ships, boats, cranes and mechanical diggers.

## Claims

1. A rail vehicle, the rail vehicle being provided with driving means (26) and a plurality of braking means (30, 32), the rail vehicle further being provided with a drive control member (20), **characterized in that** movement of the drive control member serves to control the driving means and the plurality of braking means to adjust the speed of the train, the drive control member further comprising a switch (44) by which one or more of the braking means can be selectively deactivated.

2. A rail vehicle according to claim 1 wherein the rail vehicle is further provided with a deadman automatic brake system and the drive control member comprises a switch associated with the deadman.

3. A rail vehicle according to claim 1 or claim 2 wherein further switches (46, 48) are provided on the drive control member to operate further essential functions of the rail vehicle.

4. A rail vehicle according to any of claims 1 to 3 wherein the switch or switches are arranged on the drive control member such as to prevent accidental activation.

5. A rail vehicle according to any of claims 1 to 4 wherein the drive control member has an interface surface(40, 42) adapted to be received in the palm of a user's hand, the switch or switches being provided on a surface of the drive control member other than the interface surface.

6. A rail vehicle according to claim 1, further including a drive controller comprising the drive control member and a control unit (22), the control unit being adapted to generate a drive signal upon movement of the drive control member in a first direction with respect to the control unit and generating a brake signal upon movement in a second direction opposite to the first direction, and whereby the switch is provided on the drive control member such that inadvertent operation of the switch is precluded.

7. The rail vehicle according to claim 6, wherein the drive control member is further provided with a second switch means (46), actuation of the second switch causing operation of a second essential function of the rail vehicle, whereby the second switch is also provided on the drive control member such that inadvertent operation of the second switch is precluded and whereby the first and second switches are separately located so that they can be easily tactilely differentiated

8. The rail vehicle according to claim 6 or claim 7, wherein the drive control member is movable in a third generally vertical direction to actuate a third or further essential function.

9. The rail vehicle according to any of claims 6 to 8, wherein the drive control member is generally formed as a pivotable joystick.

10. The rail vehicle according to any of claims 6 to 8, wherein the drive control member is generally formed as a slideable handgrip.

11. The rail vehicle according to any of claims 6 to 10, in which the switch is located on the surface of the drive control member generally facing in the second direction.

12. The rail vehicle according to any of claims 6 to 11, wherein the drive control member has an interface surface (40, 42) adapted to be received in the palm of a user's hand, the switch being provided on a surface of the drive control member other than the interface surface.

13. The rail vehicle according to any of claims 6 to 12, wherein the drive control member has a plurality of interface surfaces adapted to be received in the palm of a user's hand, none of the interface surfaces being provided with switches.

14. The rail vehicle according to any of claims 6 to 13, wherein the drive control member comprises a generally hollow handgrip, the handgrip being formed by two joined parts, a first generally curved body portion (54) having an interior space and a second lid portion (56) serving to close the interior space.

15. The rail vehicle according to claim 14 as dependent upon claim 12 or claim 13, wherein the joint between the first and second portions is located outside the interface surface.

16. The rail vehicle according to claim 14 or claim 15 in which the switch is provided on the lid portion.

17. The rail vehicle according to any of claims 6 to 16, wherein the drive control member includes lighting means (116) adapted to illuminate the drive control member.

18. The rail vehicle according to any of claims 6 to 17, wherein the drive control member further comprises interlock means adapted to prevent movement of the drive means in the first direction until the interlock has been released.

19. A drive controller for a rail vehicle provided with driving means (26) and a plurality of braking means (30, 32), the drive controller comprising a drive control member (20) and a control unit(22), the control unit being adapted to generate a drive signal upon movement of the drive control member in a first direction with respect to the control unit and generating a brake signal upon movement in a second direction opposite to the first direction, **characterized in that** movement of the drive control member serves to control the driving means and the plurality of braking means to adjust the speed of the train, the drive control member further being provided with a switch (44) by which one or more of the braking means can be selectively deactivated and whereby the switch is provided on the drive control member such that inadvertent operation of the switch is precluded.

20. A drive controller according to claim 19 wherein the drive control member is further provided with a second switch means (46, 48), actuation of the second switch causing operation of a second essential function of the rail vehicle, whereby the second switch is also provided on the drive control member such that inadvertent operation of the second switch is precluded and whereby the first and second switches are separately located so that they can be easily tactilely differentiated.

21. A drive controller according to claim 19 or claim 20 wherein the drive control member is movable in a third generally vertical direction to actuate a third or further essential function.

22. A drive controller according to any of claims 19 to 21 wherein the drive control member is generally formed as a pivotable joystick.

23. A drive controller according to any of claims 19 to 22 wherein the drive control member is generally formed as a slideable handgrip.

24. A drive controller according to any of claims 19 to 23 in which the switch is located on the surface of the drive control member generally facing in the second direction.

25. A drive controller according to any of claims 19 to 24 wherein the drive control member has an interface surface (40, 42) adapted to be received in the palm of a user's hand, the switch being provided on a surface of the drive control member other than the interface surface.

26. A drive controller according to any of claims 19 to 25 wherein the drive control member has a plurality of interface surfaces adapted to be received in the palm of a user's hand, none of the interface surfaces being provided with switches.

27. A drive controller according to any of claims 19 to 26 wherein the drive control member comprises a generally hollow handgrip, the handgrip being formed by two joined parts, a first generally curved body portion (52) having an interior space and a second lid portion (54) serving to close the interior space.

28. A drive controller according to claim 27 as dependent upon claim 25 or claim 26 wherein the joint between the first and second portions is located outside the interface surface.

29. A drive controller according to claim 27 or claim 28 in which the switch is provided on the lid portion.

30. A drive controller according to any of claims 19 to 29 wherein the drive control member includes lighting means (116) adapted to illuminate the drive control member.

31. A drive controller according to any of claims 19 to 3 0 wherein the drive control member further comprises interlock means adapted to prevent movement of the drive means in the first direction until the interlock has been released.

## Patentansprüche

1. Ein Schienenfahrzeug, wobei das Schienenfahrzeug mit einem Antriebsmittel (26) und mehreren Bremsmitteln (30, 32) versehen ist, wobei das Schienenfahrzeug ferner mit einer Antriebssteuerung (20) versehen ist, wobei die Bewegung der Antriebssteuerung zur Steuerung des Antriebsmittels und der mehreren Bremsmittel dient, um die Geschwindigkeit des Zugs anzupassen, wobei die Antriebssteuerung ferner einen Schalter (44) umfaßt, mit dem ein oder mehrere der Bremsmittel selektiv entaktiviert werden kann/können.

2. Ein Schienenfahrzeug nach Anspruch 1, wobei das Schienenfahrzeug ferner mit einem selbsttätigen Sicherheitsbremssystem versehen ist, und wobei die Antriebssteuerung einen mit dem selbsttätigen System verbundenen Schalter umfaßt.

3. Ein Schienenfahrzeug nach Anspruch 1 oder Anspruch 2, wobei weitere Schalter (46, 48) auf der Antriebssteuerung für weitere wesentliche Funktionen des Schienenfahrzeugs vorgesehen sind.

4. Ein Schienenfahrzeug nach einem beliebigen der vorstehenden Ansprüche 1 bis 3, wobei der/die Schalter so auf der Antriebssteuerung angeordnet ist/sind, daß ungewollte Aktivierung vermieden wird.

5. Ein Schienenfahrzeug nach einem beliebigen der vorstehenden Ansprüche 1 bis 4, wobei die Antriebssteuerung eine Schnittstellenfläche (40, 42) hat, die so angepaßt ist, daß sie in den Handteller eines Benutzers paßt, wobei der/die Schalter auf einer anderen Oberfläche der Antriebssteuerung als derjenigen der Schnittstelle angeordnet sind.

6. Ein Schienenfahrzeug nach Anspruch 1, das ferner einen Fahrschalter umfaßt, der die Antriebssteuerung und einen Regler (22) enthält, wobei der Regler geeignet ist, bei Bewegung der Antriebssteuerung in eine erste Richtung im Verhältnis zum Regler ein Antriebssignal zu generieren und bei Bewegung in eine zweite Richtung entgegengesetzt zur ersten Richtung ein Bremssignal zu generieren, und wobei der Schalter so auf der Antriebssteuerung angeordnet ist, daß ungewollte Bedienung des Schalters ausgeschlossen ist.

7. Das Schienenfahrzeug nach Anspruch 6, wobei die Antriebssteuerung ferner mit einem zweiten Schaltmittel (46) versehen ist, wobei die Betätigung des zweiten Schalters den Betrieb einer zweiten wesentlichen Funktion des Schienenfahrzeugs auslöst, wobei der zweite Schalter ebenfalls so auf der Antriebssteuerung angebracht ist, daß eine ungewollte Bedienung des zweiten Schalters ausgeschlossen ist, und wobei der erste und der zweite Schalter getrennt angeordnet sind, damit sie leicht fühlbar unterschieden werden können.

8. Das Schienenfahrzeug nach Anspruch 6 oder Anspruch 7, wobei die Antriebssteuerung in einer dritten im allgemeinen vertikalen Richtung bewegbar ist, um eine dritte oder weitere wesentliche Funktion zu aktivieren.

9. Das Schienenfahrzeug nach einem beliebigen der vorstehenden Ansprüche 6 bis 8, wobei die Antriebssteuerung im allgemeinen als drehbarer Joystick ausgebildet ist.

10. Das Schienenfahrzeug nach einem beliebigen der vorstehenden Ansprüche 6 bis 8, wobei die Antriebssteuerung im allgemeinen als ein verschiebbarer Handgriff ausgebildet ist.

11. Das Schienenfahrzeug nach einem beliebigen der vorstehenden Ansprüche 6 bis 10, wobei sich der Schalter auf der Oberfläche der Antriebssteuerung und im allgemeinen gegenüber der zweiten Richtung angeordnet ist.

12. Das Schienenfahrzeug nach einem beliebigen der vorstehenden Ansprüche 6 bis 11, wobei die Antriebssteuerung eine Schnittstellenfläche (40, 42) hat, die so angepaßt ist, daß sie in den Handteller eines Benutzers paßt, wobei der Schalter auf einer anderen Oberfläche der Antriebssteuerung als derjenigen der Schnittstelle angeordnet sind.

13. Das Schienenfahrzeug nach einem beliebigen der vorstehenden Ansprüche 6 bis 12, wobei die Antriebssteuerung mehrere Schnittstellenflächen hat, die so angepaßt sind, daß sie in den Handteller eines Benutzers passen, wobei keine der Schnittstellenflächen mit Schaltern versehen ist.

14. Das Schienenfahrzeug nach einem beliebigen der vorstehenden Ansprüche 6 bis 13, wobei die Antriebssteuerung einen im allgemeinen hohlen Handgriff umfaßt, wobei der Handgriff aus zwei verbundenen Teilen gebildet wird, wobei ein erster im allgemeinen gekrümmter Körperabschnitt (54) einen Innenraum hat, und ein zweiter Deckelabschnitt (56) dazu dient, den Innenraum zu schließen.

15. Das Schienenfahrzeug nach Anspruch 14 wie von Anspruch 12 oder Anspruch 13 abhängig, wobei sich die Fuge zwischen dem ersten und dem zweiten Abschnitt außerhalb der Schnittstellenfläche befindet.

16. Das Schienenfahrzeug nach Anspruch 14 oder Anspruch 15, wobei der Schalter auf dem Deckelabschnitt vorhanden ist.

17. Das Schienenfahrzeug nach einem beliebigen der vorstehenden Ansprüche 6 bis 16, wobei die Antriebssteuerung ein Beleuchtungsmittel (116) einschließt, das geeignet ist, die Antriebssteuerung zu beleuchten.

18. Das Schienenfahrzeug nach einem beliebigen der vorstehenden Ansprüche 6 bis 17, wobei die Antriebssteuerung ferner Blockiermittel umfaßt, die geeignet sind, die Bewegung des Antriebsmittels in die erste Richtung zu verhindern, bis die Blockierung gelöst worden ist.

19. Ein Fahrschalter für ein Schienenfahrzeug, das mit Antriebsmitteln (26) und mehreren Bremsmitteln (30, 32) versehen ist, wobei der Fahrschalter eine Antriebssteuerung (20) und einen Regler (22) umfaßt, wobei der Regler so angepaßt ist, daß er bei Bewegung der Antriebssteuerung in eine erste Richtung im Verhältnis zum Regler ein Antriebssignal generiert und bei Bewegung in eine zweite Richtung entgegengesetzt zur ersten Richtung ein Bremssignal generiert, wobei die Bewegung der Antriebssteuerung dazu dient, das Antriebsmittel und die mehreren Bremsmittel zu steuern, um die Geschwindigkeit des Zugs anzupassen, wobei die Antriebssteuerung ferner mit einem Schalter (44) versehen ist, mit dem ein oder mehrere Bremsmittel selektiv entaktiviert werden können, und wobei der Schalter so auf der Antriebssteuerung angeordnet ist, daß ungewollte Betätigung des Schalters ausgeschlossen ist.

20. Ein Fahrschalter nach Anspruch 19, wobei die Antriebssteuerung ferner mit einem zweiten Schaltmittel (46, 48) versehen ist, wobei die Betätigung des zweiten Schalters den Betrieb einer zweiten wesentlichen Funktion für das Schienenfahrzeug auslöst, wobei der zweite Schalter ebenfalls so auf der Antriebssteuerung angeordnet ist, daß ungewollte Betätigung des zweiten Schalters ausgeschlossen ist, und wobei der erste und der zweite Schalter getrennt angeordnet sind, so daß sie leicht fühlbar unterschieden werden können.

21. Ein Fahrschalter nach Anspruch 19 oder Anspruch 20, wobei die Antriebssteuerung in einer dritten im allgemeinen vertikalen Richtung bewegbar ist, um eine dritte oder weitere wesentliche Funktion zu aktivieren.

22. Ein Fahrschalter nach einem beliebigen der vorstehenden Ansprüche 19 bis 21, wobei die Antriebssteuerung im allgemeinen als drehbarer Joystick ausgebildet ist.

23. Ein Fahrschalter nach einem beliebigen der vorstehenden Ansprüche 19 bis 22, wobei die Antriebssteuerung im allgemeinen als ein verschiebbarer Handgriff ausgebildet ist.

24. Ein Fahrschalter nach einem beliebigen der vorstehenden Ansprüche 19 bis 23, wobei sich der Schalter auf der Oberfläche der Antriebssteuerung und im allgemeinen gegenüber der zweiten Richtung angeordnet befindet.

25. Ein Fahrschalter nach einem beliebigen der vorstehenden Ansprüche 19 bis 24, wobei die Antriebssteuerung eine Schnittstellenfläche (40, 42) hat, die so angepaßt ist, daß sie in den Handteller eines Benutzers paßt, wobei der Schalter auf einer anderen Oberfläche der Antriebssteuerung als derjenigen der Schnittstelle angeordnet ist.

26. Ein Fahrschalter nach einem beliebigen der vorstehenden Ansprüche 19 bis 25, wobei die Antriebssteuerung mehrere Schnittstellenflächen hat, die so angepaßt sind, daß sie in den Handteller eines Benutzers passen, wobei keine der Schnittstellenflächen mit Schaltern versehen ist.

27. Ein Fahrschalter nach einem beliebigen der vorstehenden Ansprüche 19 bis 26, wobei die Antriebssteuerung einen im allgemeinen hohlen Handgriff umfaßt, wobei der Handgriff aus zwei verbundenen Teilen gebildet wird, wobei ein erster im allgemeinen gekrümmter Körperabschnitt (52) einen Innenraum hat, und ein zweiter Deckelabschnitt (54) dazu dient, den Innenraum zu schließen.

28. Ein Fahrschalter nach Anspruch 27 wie von Anspruch 25 oder Anspruch 26 abhängig, wobei sich die Fuge zwischen dem ersten und dem zweiten Abschnitt außerhalb der Schnittstellenfläche befindet.

29. Ein Fahrschalter nach Anspruch 27 oder Anspruch 28, wobei der Schalter auf dem Deckelabschnitt vorhanden ist.

30. Ein Fahrschalter nach einem beliebigen der vorstehenden Ansprüche 19 bis 29, wobei die Antriebssteuerung ein Beleuchtungsmittel (116) einschließt, das geeignet ist, die Antriebssteuerung zu beleuchten.

31. Ein Fahrschalter nach einem beliebigen der vorstehenden Ansprüche 19 bis 30, wobei die Antriebssteuerung ferner Blockiermittel umfaßt, die geeignet sind, die Bewegung des Antriebsmittels in die erste Richtung zu verhindern, bis die Blockierung gelöst worden ist.

## Revendications

1. Véhicule ferroviaire, ce véhicule ferroviaire étant muni de moyens d'entraînement (26) et d'une pluralité de moyens de freinage (30, 32), le véhicule ferroviaire étant en outre muni d'un élément de commande d'entraînement (20), **caractérisé en ce que** le mouvement de l'élément de commande d'entraînement sert à commander les moyens d'entraînement et la pluralité de moyens de freinage pour ajuster la vitesse du train, l'élément de commande d'entraînement comprenant, en outre, un commutateur (44) grâce auquel il est possible de désactiver de manière sélective un ou plusieurs des moyens de freinage.

2. Véhicule ferroviaire selon la revendication 1, dans lequel le véhicule ferroviaire est, en outre, muni d'un système de freinage automatique d'homme mort et l'élément de commande d'entraînement comprend un commutateur associé au système d'homme mort.

3. Véhicule ferroviaire selon la revendication 1 ou la revendication 2, dans lequel d'autres commutateurs (46, 48) sont fournis sur l'élément de commande d'entraînement pour actionner d'autres fonctions essentielles du véhicule ferroviaire.

4. Véhicule ferroviaire selon l'une quelconque des revendications 1 à 3, dans lequel le commutateur ou les commutateurs sont agencés sur l'élément de commande d'entraînement, de façon à empêcher une activation accidentelle.

5. Véhicule ferroviaire selon l'une quelconque des revendications 1 à 4, dans lequel l'élément de commande d'entraînement possède une surface d'interface (40, 42) conçue pour être reçue dans la paume de la main d'un utilisateur, le commutateur ou les commutateurs étant disposés sur une surface de l'élément de commande d'entraînement autre que la surface d'interface.

6. Véhicule ferroviaire selon la revendication 1, incluant en outre un dispositif de commande d'entraînement comprenant l'élément de commande d'entraînement et une unité de commande (22), l'unité de commande étant conçue pour générer un signal d'entraînement en réponse à un déplacement de l'élément de commande d'entraînement dans une première direction par rapport à l'unité de commande et la régénération d'un signal de freinage en réponse à un déplacement dans une deuxième direction opposée à la première direction, le commutateur étant disposé sur l'élément de commande d'entraînement de telle sorte que le fonctionnement intempestif du commutateur soit exclu.

7. Véhicule ferroviaire selon la revendication 6, dans lequel l'élément de commande d'entraînement est, en outre, muni d'un deuxième moyen de commutateur (46), l'actionnement du deuxième commutateur provoquant le fonctionnement d'une deuxième fonction essentielle du véhicule ferroviaire, le deuxième commutateur étant également disposé sur l'élément de commande d'entraînement de telle sorte qu'un fonctionnement intempestif du deuxième commutateur soit exclu, les premier et deuxième commutateurs étant situés séparément, de telle sorte qu'ils peuvent être différenciés facilement par le toucher.

8. Véhicule ferroviaire selon la revendication 6 ou la revendication 7, dans lequel l'élément de commande d'entraînement peut se déplacer dans une troisième direction généralement verticale pour actionner une troisième ou une autre fonction essentielle.

9. Véhicule ferroviaire selon l'une quelconque des revendications 6 à 8, dans lequel l'élément de commande d'entraînement a généralement la forme d'une manette de commande pivotante.

10. Véhicule ferroviaire selon l'une quelconque des revendications 6 à 8, dans lequel l'élément de commande d'entraînement a généralement la forme d'une poignée coulissante.

11. Véhicule ferroviaire selon l'une quelconque des revendications 6 à 10, dans lequel le commutateur est situé sur la surface de l'élément de commande d'entraînement qui fait face généralement à la deuxième direction.

12. Véhicule ferroviaire selon l'une quelconque des revendications 6 à 11, dans lequel l'élément de commande d'entraînement possède une surface d'interface (40, 42) conçue pour être reçue dans la paume de la main d'un utilisateur, le commutateur étant disposé sur une surface de l'élément de commande d'entraînement autre que la surface d'interface.

13. Véhicule ferroviaire selon l'une quelconque des revendications 6 à 12, dans lequel l'élément de commande d'entraînement possède une pluralité de surfaces d'interface conçues pour être reçues dans la paume de la main d'un utilisateur, aucune des surfaces d'interface n'étant munie de commutateurs.

14. Véhicule ferroviaire selon l'une quelconque des revendications 6 à 13, dans lequel l'élément de commande d'entraînement comprend une poignée généralement creuse, la poignée étant constituée de deux parties jointes, une première portion de corps généralement incurvée (54) disposant d'un espace intérieur, et une deuxième portion de couvercle (56) servant à fermer l'espace intérieur.

15. Véhicule ferroviaire selon la revendication 14 en tant que revendication dépendante de la revendication 12 ou de la revendication 13, dans lequel le joint entre la première et la deuxième portions est situé à l'extérieur de la surface d'interface.

16. Véhicule ferroviaire selon la revendication 14 ou la revendication 15, dans lequel le commutateur est fourni sur la portion de couvercle.

17. Véhicule ferroviaire selon l'une quelconque des revendications 6 à 16, dans lequel l'élément de commande d'entraînement inclut un moyen d'éclairage (116) conçu pour éclairer l'élément de commande d'entraînement.

18. Véhicule ferroviaire selon l'une quelconque des revendications 6 à 17, dans lequel l'élément de commande d'entraînement comprend, en outre, un élément de verrouillage conçu pour empêcher le déplacement des moyens d'entraînement dans une première direction, jusqu'à ce que le verrouillage ait été libéré.

19. Dispositif de commande d'entraînement pour un véhicule ferroviaire muni de moyens d'entraînement (26) et d'une pluralité de moyens de freinage (30, 32), le dispositif de commande d'entraînement comprenant un élément de commande d'entraînement (20) et une unité de commande (22), l'unité de commande étant conçue pour générer un signal d'entraînement en réponse à un déplacement de l'élément de commande d'entraînement dans une première direction par rapport à l'unité de commande et la génération d'un signal de freinage en réponse à un déplacement dans une deuxième direction opposée à la première direction, **caractérisé en ce que** le déplacement de l'élément de commande d'entraînement sert à commander les moyens d'entraînement et la pluralité de moyens de freinage pour ajuster la vitesse du train, l'élément de commande d'entraînement étant en outre muni d'un commutateur (44) grâce auquel un ou plusieurs des moyens de freinage peut être désactivé de manière sélective, le commutateur étant disposé sur l'élément de commande d'entraînement de telle sorte qu'un fonctionnement intempestif du commutateur soit exclu.

20. Dispositif de commande d'entraînement selon la revendication 19 dans lequel l'élément de commande d'entraînement est, en outre, muni d'un deuxième moyen de commutateur (46, 48), l'actionnement du deuxième commutateur provoquant le fonctionnement d'une deuxième fonction essentielle du véhicule ferroviaire, le deuxième commutateur étant également disposé sur l'élément de commande d'entraînement de telle sorte qu'un fonctionnement intempestif du deuxième commutateur soit exclu, les premier et deuxième commutateurs étant séparés, de telle sorte qu'ils peuvent être différenciés facilement au toucher.

21. Dispositif de commande d'entraînement selon la revendication 19 ou la revendication 20, dans lequel l'élément de commande d'entraînement peut se déplacer dans une troisième direction généralement verticale pour actionner une troisième ou une autre fonction essentielle.

22. Dispositif de commande d'entraînement selon l'une quelconque des revendications 19 à 21, dans lequel l'élément de commande d'entraînement a généralement la forme d'une manette de commande pivotante.

23. Dispositif de commande d'entraînement selon l'une quelconque des revendications 19 à 22, dans lequel l'élément de commande d'entraînement a généralement la forme d'une poignée coulissante.

24. Dispositif de commande d'entraînement selon l'une quelconque des revendications 19 à 23, dans lequel le commutateur est situé sur la surface de l'élément de commande d'entraînement qui fait généralement face à la deuxième direction.

25. Dispositif de commande d'entraînement selon l'une quelconque des revendications 19 à 24, dans lequel l'élément de commande d'entraînement possède une surface d'interface (40, 42) conçue pour être reçue dans la paume de la main d'un utilisateur, le commutateur étant disposé sur une surface de l'élément de commande d'entraînement autre que la surface d'interface.

26. Dispositif de commande d'entraînement selon l'une quelconque des revendications 19 à 25, dans lequel l'élément de commande d'entraînement possède une pluralité de surfaces d'interface conçues pour être reçues dans la paume de la main d'un utilisateur, aucune des surfaces d'interface n'étant munie de commutateurs.

27. Dispositif de commande d'entraînement selon l'une quelconque des revendications 19 à 26, dans lequel l'élément de commande d'entraînement comprend une poignée généralement creuse, la poignée étant composée de deux parties jointes, une première portion de corps généralement incurvée (52) disposant d'un espace intérieur et une deuxième portion de couvercle (54) servant à fermer l'espace intérieur.

28. Dispositif de commande d'entraînement selon la revendication 27 en tant que revendication dépendante de la revendication 25 ou de la revendication 26, dans lequel le joint entre les première et deuxième portions est situé à l'extérieur de la surface d'interface.

29. Dispositif de commande d'entraînement selon la revendication 27 ou la revendication 28, dans lequel le commutateur est fourni sur la portion de couvercle.

30. Dispositif de commande d'entraînement selon l'une quelconque des revendications 19 à 29, dans lequel l'élément de commande d'entraînement inclut un moyen d'éclairage (116) conçu pour éclairer l'élément de commande d'entraînement.

31. Dispositif de commande d'entraînement selon l'une quelconque des revendications 19 à 30, dans lequel l'élément de commande d'entraînement comprend en outre un moyen de verrouillage conçu pour empêcher le déplacement des moyens d'entraînement dans la première direction jusqu'à ce que le verrouillage ait été libéré.
